# EUROPEAN PATENT APPLICATION

(11) **EP 4 748 613 A1**
(43) Date of publication of application: **27.05.2026**
(21) Application number: 25213697.3
(22) Date of filing: 05.11.2025
(51) Int. Cl.: B60K 35/81

(54) **CONTROLLER**

(30) Priority: 25.11.2024 JP 2024204601
(71) Applicant: TOYOTA JIDOSHA KABUSHIKI KAISHA, Toyota-shi, Aichi-ken 471-8571 (JP)
(72) Inventor: OGAWA, Takahiro, Toyota-shi, 471-8571 (JP); KONDO, Fumio, Toyota-shi, 471-8571 (JP); NAGATA, Jiyunya, Toyota-shi, 471-8571 (JP); ISOBE, Toshiya, Toyota-shi, 471-8571 (JP)
(74) Representative: J A Kemp LLP

(57) **Abstract**

A controller includes an execution device and a non-transitory computer-readable storage medium. The storage medium stores playback content items. A playback content item refers to content in which multiple videos are switched and displayed on a display. The execution device acquires user information of a user in a vehicle. The execution device selects a specific content item from among the playback content items based on the acquired user information. The execution device plays the selected specific content item to display the videos.

## Description

### CROSS-REFERENCE TO RELATED APPLICATIONS

This application is based upon and claims the benefit of priority from Japanese Patent Application No. 2024-204601, filed on November 25, 2024, the entire contents of which are incorporated herein by reference.

### BACKGROUND

### 1. Field

The present disclosure relates to a controller.

### 2. Description of Related Art

JP2024-509999A describes a multimedia content demonstration device. The multimedia content demonstration device, upon selection of a demonstration mode, displays a video in the demonstration mode.

In some cases, a multimedia content demonstration device of the type described in JP2024-509999A may serve as a controller and control a display mounted on a vehicle. Such a controller may store playback content items. A playback content item refers to content in which multiple videos are switched and displayed on a display. However, the controller may be unable to play back a playback content item that is suitable for a user in the vehicle.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a controller is configured to control an output to a display mounted on a vehicle. The controller includes a non-transitory computer-readable storage medium and an execution device. The storage medium stores multiple playback content items. Each playback content item is content in which multiple videos are switched and displayed on the display. The execution device is configured to acquire user information of a user in the vehicle, select a specific content item from among the playback content items based on the acquired user information, and play the selected specific content item to display the videos.

Other features and aspects will be apparent from the following detailed description, the drawings, and the claims.

### BRIEF DESCRIPTION OF THE DRAWINGS

Fig. 1 is a schematic diagram showing a vehicle according to an embodiment.
Fig. 2 is an explanatory diagram showing playback content items according to the embodiment.
Fig. 3 is a flowchart showing a series of processes including selection and playback of a playback content item according to the embodiment.
Fig. 4 is a flowchart showing a series of processes related to control of content displayed on a display according to the embodiment.
Fig. 5 is a schematic diagram illustrating a start image included in a start video of a demonstration mode according to the embodiment.
Fig. 6 is a schematic diagram illustrating a stationary state image included in a stationary state video according to the embodiment.
Fig. 7 is a schematic diagram illustrating a first guide image included in the stationary state video according to the embodiment.
Fig. 8 is a schematic diagram illustrating a first traveling state image included in a first traveling state video according to the embodiment.
Fig. 9 is a schematic diagram illustrating a second guide image included in the first traveling state video according to the embodiment.
Fig. 10 is a schematic diagram illustrating a driver assistance image included in a driver assistance video according to the embodiment.
Fig. 11 is a schematic diagram illustrating a third guide image included in the driver assistance video according to the embodiment.
Fig. 12 is a schematic diagram illustrating a charging state image included in a charging state video according to the embodiment.
Fig. 13 is a schematic diagram illustrating a fourth guide image included in the charging state video according to the embodiment.
Fig. 14 is a schematic diagram illustrating a second traveling state image included in a second traveling state video according to the embodiment.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

A controller 70 according to an embodiment will now be described with reference to the drawings.

### Overview of Vehicle

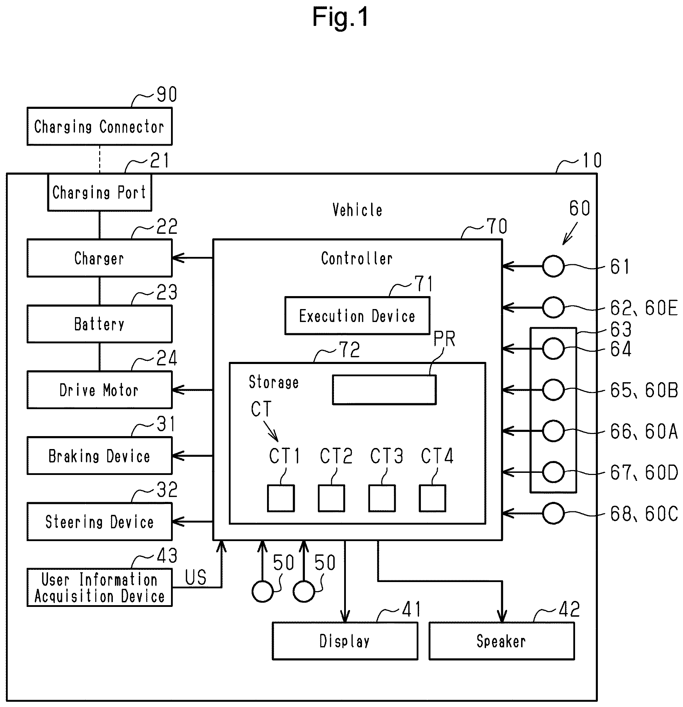

As shown in Fig. 1, a vehicle 10 includes a charging port 21, a charger 22, a battery 23, and a drive motor 24. The vehicle 10 is a battery electric vehicle.

The charging port 21 is connected to a charging connector 90 outside the vehicle 10. When the charging connector 90 is connected to the charging port 21, the battery 23 can be charged by an electric power source outside the vehicle 10.

The drive motor 24 is a drive source of the vehicle 10. The drive motor 24 drives the vehicle 10 by using electric power stored in the battery 23. The battery 23 stores electric power for driving the drive motor 24.

The charger 22 includes a power conversion circuit and a relay that selectively switches connection and disconnection of a power path from the charging port 21 to the battery 23. The battery 23 is charged by controlling the charger 22.

The vehicle 10 includes a braking device 31 and a steering device 32. The braking device 31 mechanically brakes the wheels of the vehicle 10. The braking device 31 includes mechanical brakes. For example, the braking device 31 includes disc brakes.

The steering device 32 is an electric rack-and-pinion steering system. The steering device 32 can change the orientation of steerable wheels of the vehicle 10 by controlling a rack and pinion (not shown).

The vehicle 10 includes a display 41 and a speaker 42. The display 41 is mounted on the vehicle 10. The display 41 is positioned so as to be visible to a driver of the vehicle 10 while the vehicle 10 is traveling. In the present embodiment, the display 41 is a center display. The display 41 displays images and videos. The speaker 42 outputs sound into the interior of the vehicle 10.

The vehicle 10 includes a user information acquisition device 43. The user information acquisition device 43 acquires user information US, which is information of users in the vehicle 10. The user information acquisition device 43 includes a camera that captures images of the interior of the vehicle 10.

Based on images captured by the camera, the user information acquisition device 43 determines, as the user information US, information indicating the number of users in the vehicle 10, information indicating the gender of each user, and information indicating the age group of each user. The user information acquisition device 43 outputs the acquired user information US to the controller 70.

The vehicle 10 includes multiple sensors 50, multiple operating members 60, and a controller 70. The sensors 50 include, for example, a vehicle speed sensor, a shift position sensor, a sonar, and a camera sensor. Fig. 1 shows only two of the sensors 50. The sensors 50 output detection signals to the controller 70.

The operating members 60 can be operated by the driver while the vehicle 10 is traveling. The operating members 60 are operated to implement a traveling operation of the vehicle 10. The traveling operation of the vehicle 10 include a traveling function, a charging function, and a driver assistance function. When any of the operating members 60 is operated, the operating member 60 outputs an operation signal to the controller 70.

The operating members 60 include an accelerator pedal 61 and a brake pedal 62. The accelerator pedal 61 is operated by being depressed with a driver's foot when the driver adjusts acceleration while the vehicle 10 is traveling. In other words, the accelerator pedal 61 is operated to implement part of the traveling function that enables the vehicle 10 to travel.

The brake pedal 62 is operated by being depressed with a driver's foot when the driver adjusts deceleration while the vehicle 10 is traveling. In other words, the brake pedal 62 is operated to implement part of the traveling function that enables the vehicle 10 to stop.

The vehicle 10 includes a steering wheel 63. The steering wheel 63 includes a wheel body 64, multiple switches 65, a first touchscreen display 66, and a second touchscreen display 67. The wheel body 64 is operated when the driver adjusts the steering angle while the vehicle 10 is traveling. In other words, the wheel body 64 is operated to implement part of the traveling function that enables the vehicle 10 to turn.

The switches 65 are operated by being pressed by the driver while the vehicle 10 is traveling. For example, when one of the switches 65 is operated, the direction indicator lamps of the vehicle 10 or the hazard warning lights of the vehicle 10 are caused to blink. In other words, the switches 65 are operated to implement part of the traveling operation of the vehicle 10 that is required during traveling.

The first touchscreen display 66 is located near the wheel body 64. The first touchscreen display 66 is operated by being touched by the driver while the vehicle 10 is traveling. The first touchscreen display 66 displays, for example, an operation screen of a driver assistance function described below. In other words, the first touchscreen display 66 is operated to implement a driving function of the vehicle 10.

The second touchscreen display 67 is located near the wheel body 64. The second touchscreen display 67 is operated by being touched by the driver while the vehicle 10 is traveling. The second touchscreen display 67 displays, for example, a screen that allows for selection of a traveling mode of the vehicle 10. The traveling modes include, for example, an eco mode and a sport mode. In other words, the second touchscreen display 67 is operated to implement the traveling function of the vehicle 10.

In the present embodiment, the first touchscreen display 66 is located closer to the front side window on the driver's seat side in the vehicle 10 than the wheel body 64 is. The second touchscreen display 67 is located closer to the front passenger seat of the vehicle 10 than the wheel body 64 is.

The operating members 60 include the wheel body 64, the switches 65, the first touchscreen display 66, and the second touchscreen display 67. The operating members 60 include a charging operation button 68.

The charging operation button 68 is provided near the driver's seat of the vehicle 10. When a specified operation is performed on the charging operation button 68, the charging port 21 is connectable to the charging connector 90 outside the vehicle 10. Specifically, when the charging operation button 68 is operated, the controller 70 opens the cover that covers the connection opening of the charging port 21. The charging operation button 68 can be used only when the vehicle 10 is stationary or when the vehicle 10 is traveling at or below a predetermined constant speed. In other words, the charging operation button 68 is operated to implement the charging function of the vehicle 10.

### Controller

The controller 70 controls charging, traveling, driver assistance, and multimedia output in the vehicle 10. The controller 70 includes an execution device 71, which is a central processing unit (CPU), and a storage 72, which is a memory. The storage 72 stores various programs to be executed by the execution device 71. The execution device 71 controls charging, traveling, driver assistance, and multimedia output in the vehicle 10 by executing the programs. The execution device 71 is processing circuitry including one or more processors that execute various processes in accordance with computer programs (software). The storage 72 is a non-transitory computer-readable storage medium.

The controller 70 controls charging of the vehicle 10. The controller 70 opens the cover of the charging port 21 when the specified operation is performed on the charging operation button 68. Next, when detecting that the charging connector 90 is connected to the charging port 21, the controller 70 controls the charger 22 to start charging the battery 23. The controller 70 controls the charger 22 to end the charging of the battery 23 with reference to the state of charge of the battery 23.

The controller 70 controls traveling of the vehicle 10. The controller 70 drives the drive motor 24 using electric power stored in the battery 23. The controller 70 controls the output of the drive motor 24 based on the operated amount of the accelerator pedal 61. The controller 70 controls the output of the braking device 31 based on the operated amount of the brake pedal 62. The controller 70 controls the steering device 32 based on the operated amount of the wheel body 64.

The controller 70 controls driver assistance of the vehicle 10. The controller 70 is capable of implementing multiple features included in an advanced driver-assistance system (ADAS). The functions of the ADAS include pre-crash safety (PCS) and adaptive cruise control (ACC). A specific method of implementing each function will not be described in detail. The controller 70 implements various functions based on detection signals from the sensors 50. A specific method of implementing each function will not be described in detail.

The controller 70 controls the output of multimedia content of the vehicle 10. Particularly, the controller 70 controls output to the display 41 and the speaker 42 in a demonstration mode of the vehicle 10 while the vehicle 10 is stationary.

The storage 72 stores an output program PR for outputting multimedia content in the demonstration mode of the vehicle 10. Further, the storage 72 stores multiple playback content items CT.

The playback content items CT are content items for playing multimedia content. Each playback content item CT includes multiple video files DA. Each video file DA is a data file for playback of a video. Each playback content item CT is content in which multiple video files DA are switched and displayed on the display 41 at specified time intervals determined in advance.

Each video file DA includes image data to be output to the display 41 and audio data to be output to the speaker 42. The image data includes multiple images that are continuous in time series. The audio data includes, for example, data representing music synchronized with the time series of the image data.

Further, the storage 72 stores multiple playback content items CT. The playback content items include a first playback content item CT1, a second playback content item CT2, a third playback content item CT3, and a fourth playback content item CT4. The first playback content item CT1 is content that follows a standard storyline.

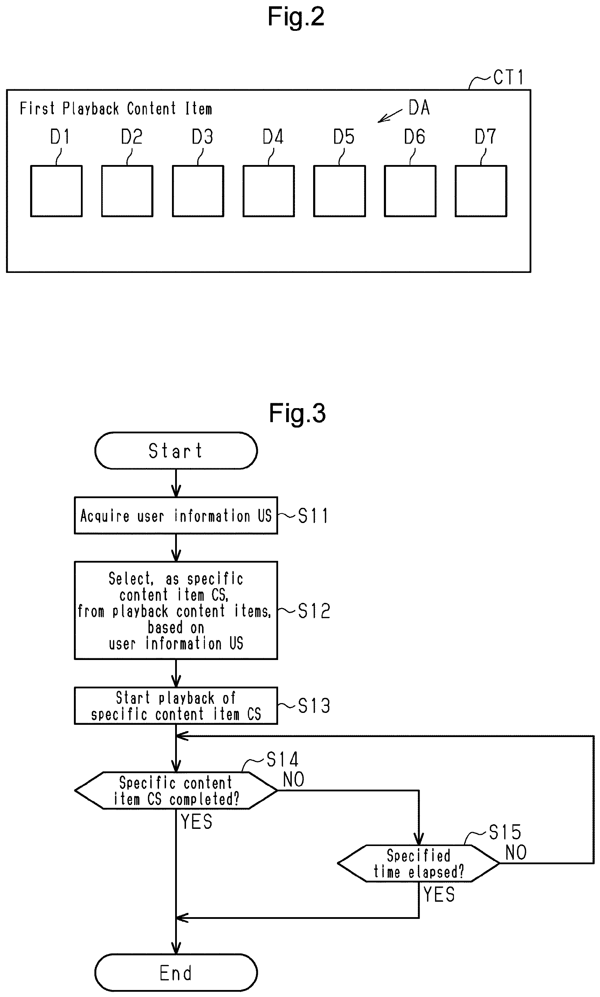

As shown in Fig. 2, the first playback content item CT1 includes multiple video files DA. The video files DA include a first file D1 for playback of a demonstration mode start video M1, a second file D2 for playback of a stationary state video M2, and a third file D3 for playback of a first traveling state video M3. The video files DA also include a fourth file D4 for playback of a driver assistance video M4 and a fifth file D5 for playback of a charging state video M5. In addition, the video files DA include a sixth file D6 for playback of a second traveling state video M6 and a seventh file D7 for playback of a demonstration mode termination video M7. As described above, in the present embodiment, the first playback content item CT1 stores seven video files DA.

In the present embodiment, there are the following six combinations of a first video and a second video in the first playback content item CT1. In a first combination, the demonstration mode start video M1 corresponds to the first video, and the first file D1 corresponds to the first video file for playing the first video. In this case, the stationary state video M2 corresponds to the second video, and the second file D2 corresponds to the second video file for playing the second video.

In a second combination, the stationary state video M2 corresponds to the first video, and the second file D2 corresponds to a first video file. In this case, the first traveling state video M3 corresponds to the second video, and the third file D3 corresponds to a second video file.

In a third combination, the first traveling state video M3 corresponds to the first video, and the third file D3 corresponds to the first video file. In this case, the driver assistance video M4 corresponds to the second video, and the fourth file D4 corresponds to the second video file.

In a fourth combination, the driver assistance video M4 corresponds to the first video, and the fourth file D4 corresponds to the first video file. In this case, the charging state video M5 corresponds to the second video, and the fifth file D5 corresponds to the second video file.

In a fifth combination, the charging state video M5 corresponds to the first video, and the fifth file D5 corresponds to the first video file. In this case, the second traveling state video M6 corresponds to the second video, and the sixth file D6 corresponds to the second video file.

In a sixth combination, the second traveling state video M6 corresponds to the first video, and the sixth file D6 corresponds to the first video file. In this case, the demonstration mode termination video M7 corresponds to the second video, and the seventh file D7 corresponds to the second video file.

As described below, each of the first traveling state video M3, the driver assistance video M4, and the second traveling state video M6 includes an image simulating a state in which the vehicle 10 is traveling. Accordingly, in any of the second to sixth combinations, at least one of the first video or the second video is an image simulating a state in which the vehicle 10 is traveling.

Although detailed description of the second playback content item CT2, the third playback content item CT3, and the fourth playback content item CT4 is omitted, all or some of the playback content items CT are different from each other.

The second playback content item CT2 is content that follows a storyline intended for multiple users including children. The third playback content item CT3 is content that follows a storyline for a simulated high-speed driving experience. The fourth playback content item CT4 is content that follows a storyline for a simulated urban driving experience.

### Selection and Playback of Playback Content Item

When an operation of initiating display in the multimedia demonstration mode is performed in the vehicle 10, the execution device 71 starts execution of the output program PR, on condition that the vehicle 10 is stationary. When the execution of the output program PR is started, the execution device 71 selects and plays the playback content item CT based on the user information US. The execution device 71 determines that the vehicle 10 is stationary when the shift position of the vehicle 10 is in a parking position and the vehicle speed is zero.

As shown in Fig. 3, when the execution device 71 starts executing the output program PR, the execution device 71 first performs the process of step S11. In step S11, the execution device 71 acquires the user information US from the user information acquisition device 43. Thereafter, the execution device 71 advances the process to step S12.

In step S12, the execution device 71 selects, as a specific content item CS, one of the multiple playback content items CT, based on the user information US. The execution device 71 calculates, as an output value, a value indicating the specific content item CS using the user information US as an input value to a map determined in advance by tests and simulations.

For example, when the user information US indicates that the number of users is one and the gender of the user is female, the execution device 71 selects the fourth playback content item CT4 as the specific content item CS, regardless of age group.

When the user information US indicates that the number of users is one and the gender of the user is male, the execution device 71 selects the third playback content item CT3 as the specific content item CS, regardless of age group.

When the user information US indicates that the number of users is two or more and includes at least one user in an age group under 10 years old, the execution device 71 selects the third playback content item CT3 as the specific content item CS, regardless of gender.

When the user information US indicates that the number of users is two or more and includes no user in an age group under 10 years old, the execution device 71 selects the first playback content item CT1 as the specific content item CS, regardless of gender. Thereafter, the execution device 71 advances the process to step S13.

In step S13, the execution device 71 starts playback of the specific content item CS selected in step S12. A detailed process when the specific content item CS is played will be described later. Thereafter, the execution device 71 advances the process to step S14.

In step S14, the execution device 71 determines whether the specific content item CS is completed. Specifically, when the whole storyline of the specific content item CS is completed, that is, when playback of the last video is completed, the execution device 71 determines that the specific content item CS is completed.

When the specific content item CS is completed (S14: YES), the execution device 71 ends the current series of processes. In contrast, when the specific content item CS has not been completed (S14: NO), the execution device 71 advances the process to step S15.

In step S15, the execution device 71 determines whether a specified time has elapsed from the start of playback of the specific content item CS. The specified time is a predetermined duration, established through testing or simulation, that represents a threshold amount of time after which progress of the storyline of the specific content item CS is deemed to have stalled. If the specified time has not elapsed (S15: NO), the execution device 71 returns process to step S14. If the specified time has elapsed (S15: YES), the execution device 71 ends the current series of processes.

### Details of Playback of the Specific Content Item

When playback of the specific content item CS is started by the process of step S14 described above, the execution device 71 performs a series of processes related to multimedia output using the video files DA. A case will now be described in which the first playback content item CT1 has been selected as the specific content item CS.

### Demonstration Mode Start Video

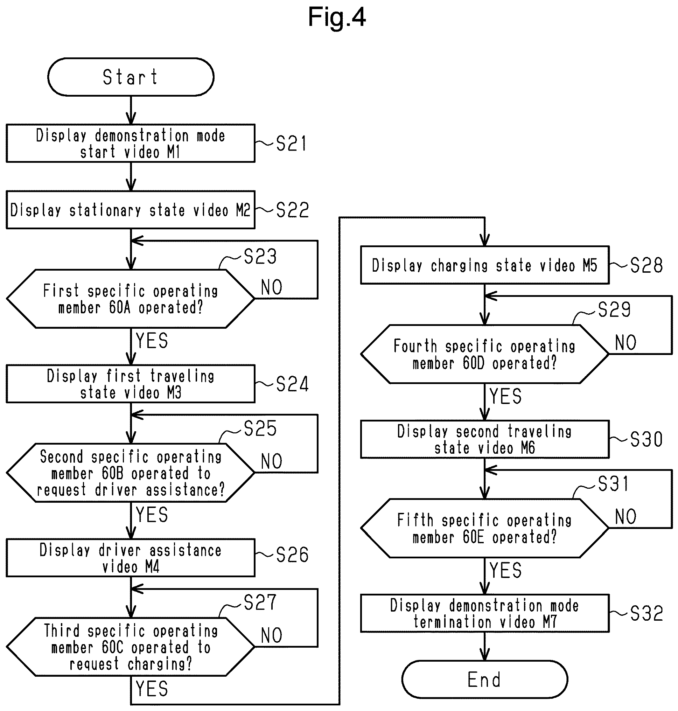

As shown in Fig. 4, when starting execution of the output program PR, the execution device 71 first executes the process of step S21. In step S21, the execution device 71 plays the demonstration mode start video M1. Specifically, the execution device 71 causes the display 41 to display an image included in the first file D1 for playing the demonstration mode start video M1, and causes the speaker 42 to output sound included in the first file D1.

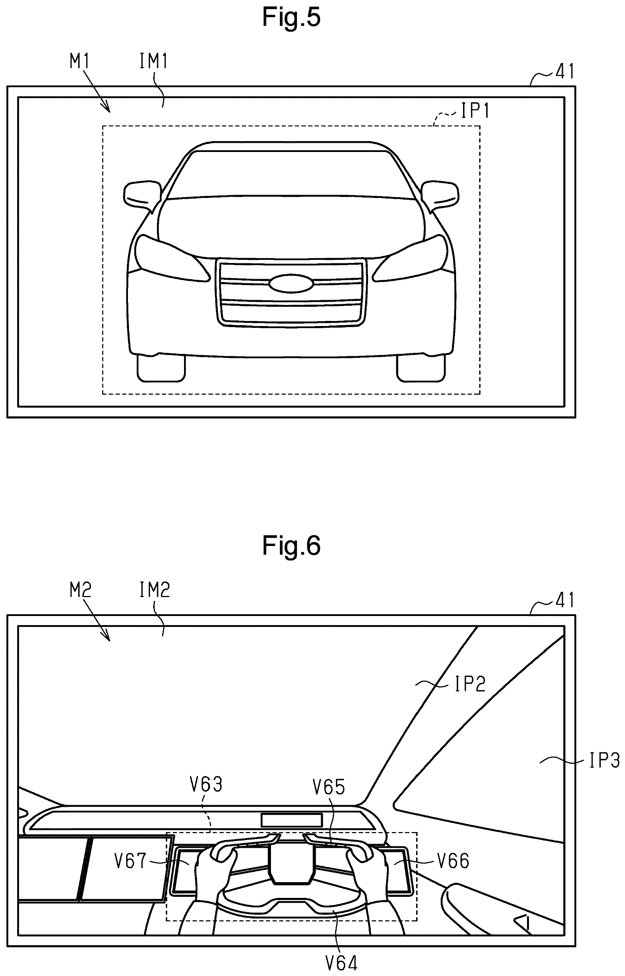

As shown in Fig. 5, the demonstration mode start video M1 includes a start image IM1 indicating the start of the demonstration mode. The start image IM1 includes an exterior image IP1 showing the exterior of the vehicle 10. For example, the demonstration mode start video M1 may be a video in which images of the vehicle 10 viewed from the front, from the right side, from the rear, and from the left side are sequentially presented in time, thereby showing the exterior of the vehicle 10 from different directions.

As shown in Fig. 4, when a predetermined period has elapsed after the demonstration mode start video M1 is displayed, the execution device 71 ends playback of the demonstration mode start video M1. Thereafter, the execution device 71 advances the process to step S22.

In step S22, the execution device 71 plays the stationary state video M2. Specifically, the execution device 71 causes the display 41 to display an image included in the second file D2 for playing the stationary state video M2, and causes the speaker 42 to output sound included in the second file D2.

### Stationary State Video

As shown in Fig. 6, the stationary state video M2 includes a stationary state image IM2, which simulates the field of view from the driver's seat when the vehicle 10 is stationary. The stationary state image IM2 represents an image from the driver's perspective as seen from the driver's seat of the vehicle 10. The image from the driver's perspective is an image of a range including a steering wheel image V63 representing the steering wheel 63 and a partial image IP2 representing a part of the windshield of the vehicle 10 in the front range viewed from the driver's seat in the vehicle 10. In addition, the image from the driver's perspective is an image of a range including a partial image IP3 representing a part of the front side glass of the driver's seat side of the vehicle 10 in the front range seen from the driver's seat of the vehicle 10. The steering wheel image V63 includes a wheel body image V64 representing the wheel body 64 and switch images V65 representing the switches 65. The steering wheel image V63 includes a first touchscreen display image V66 representing the first touchscreen display 66 and a second touchscreen display image V67 representing the second touchscreen display 67. The stationary state image IM2 shows a state in which both hands of the driver are gripping the wheel body 64.

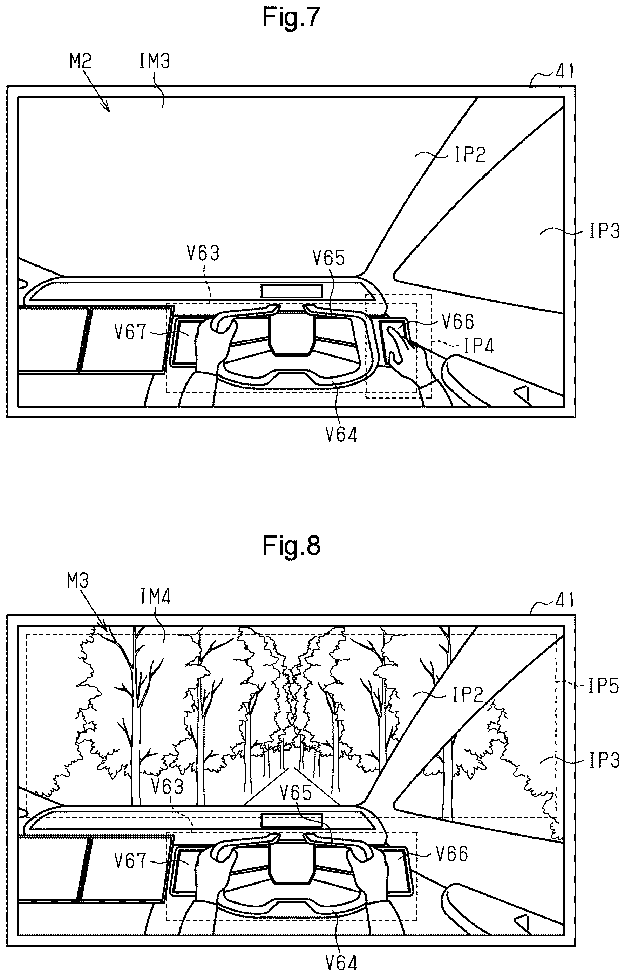

As shown in Fig. 7, the stationary state video M2 includes a first guide image IM3 subsequent in time series to the stationary state image IM2. Similar to the stationary state image IM2, the first guide image IM3 is an image from the driver's perspective. The first guide image IM3 is an image representing operation of a first specific operating member 60A, which is one of the operating members 60 determined in advance to switch the stationary state video M2 to a subsequent video.

The first specific operating member 60A is the operating member 60 for switching display of the stationary state video M2 to a subsequent video while the stationary state video M2 is being displayed. In the present embodiment, the first specific operating member 60A is the first touchscreen display 66. The first guide image IM3 includes a partial image IP4 that guides the user to operate the first touchscreen display 66. Specifically, the partial image IP4 represents a state in which the driver's right hand is operating the first touchscreen display 66, which is the first specific operating member 60A.

In the images of the stationary state video M2 that are continuous in time series, the image of the scenery outside the vehicle 10 does not change. Specifically, the images of the stationary state video M2 that are continuous in time series do not include an image that shows the scenery outside the vehicle 10.

As shown in Fig. 4, the execution device 71 displays the stationary state video M2 in step S22, and then advances the process to step S23. In step S23, the execution device 71 determines whether the first specific operating member 60A has been operated. When the first specific operating member 60A, that is, the first touchscreen display 66 has not been operated (S23: NO), the execution device 71 repeats the process of step S23. In contrast, when the first specific operating member 60A has been operated (S23: YES), the execution device 71 advances the processing to step S24. The stationary state video M2 continues to be played until an affirmative determination is made in step S23.

In step S24, the execution device 71 plays the first traveling state video M3 in place of the stationary state video M2. Specifically, the execution device 71 causes the display 41 to display an image included in the third file D3 for playing the first traveling state video M3, and causes the speaker 42 to output sound included in the third file D3.

In other words, the execution device 71 causes the display 41 to display the first traveling state video M3 in place of the stationary state video M2 on condition that the first specific operating member 60A has been operated while the stationary state video M2 is displayed on the display 41 of the vehicle 10 in a stationary state.

### First Traveling State Video

As shown in Fig. 8, the first traveling state video M3 includes a first traveling state image IM4 that simulates the field of view from the driver in the driver's seat while the vehicle 10 is traveling. The first traveling state image IM4 is an image simulating a traveling state of the vehicle 10. Similar to the stationary state image IM2, the first traveling state image IM4 is an image from the driver's perspective.

The first traveling state image IM4 includes a first background image IP5 that represents scenery outside the vehicle 10. The first background image IP5 represents the vehicle 10 traveling on a road surrounded by trees. In the images of the first traveling state video M3 that are continuous in time series, the image of the scenery outside the vehicle 10 changes so as to represent the vehicle 10 traveling.

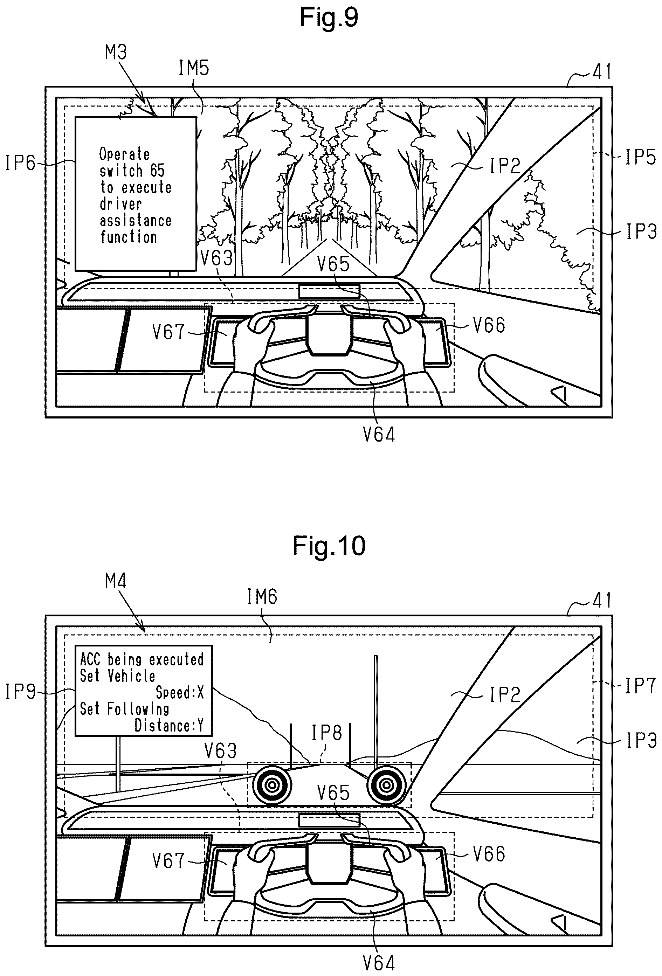

As shown in Fig. 9, the first traveling state video M3 includes a second guide image IM5 subsequent in time series to the first traveling state image IM4. Similar to the stationary state image IM2, the second guide image IM5 is an image from the driver's perspective. The second guide image IM5 includes a text image IP6 showing a message that inquires whether to execute a driver assistance function. The text image IP6 indicates that one of the switches 65 needs to be operated to execute the ADAS function. Specifically, the text image IP6 shows, as a message, the text: "Operate switch 65 to execute driver assistance function."

As shown in Fig. 4, the execution device 71 displays the first traveling state video M3 in step S24, and then advances the process to step S25. In step S25, the execution device 71 determines whether an operation for requesting driver assistance has been performed. The operation for requesting driver assistance is operation of a second specific operating member 60B. The second specific operating member 60B is one of the operating members 60 determined in advance to switch the first traveling state video M3 to a subsequent video. The second specific operating member 60B is one of the switches 65. Accordingly, the execution device 71 determines whether the switch 65 has been operated to request the driver assistance.

When the switch 65 has not been operated to request the function of driver assistance (S25: NO), the execution device 71 repeats the process of step S25. In contrast, when the switch 65 is operated to request the function of driver assistance (S25: YES), the execution device 71 advances the process to step S26. The first traveling state video M3 continues to be played until an affirmative determination is made in step S25.

### Driver Assistance Video

In step S26, the execution device 71 plays the driver assistance video M4. Specifically, the execution device 71 causes the display 41 to display an image included in the fourth file D4 for playing the driver assistance video M4, and causes the speaker 42 to output sound included in the fourth file D4.

In other words, the execution device 71 causes the display 41 to display the driver assistance video M4 in place of the first traveling state video M3 on condition that the second specific operating member 60B has been operated while the first traveling state video M3 is displayed on the display 41 of the vehicle 10 in a stationary state. The condition in this case is that the second specific operating member 60B has been operated to request driver assistance.

As shown in Fig. 10, the driver assistance video M4 includes a driver assistance image IM6 that simulates a state in which the vehicle 10 is traveling and the driver assistance function is being executed. The driver assistance image IM6 is an image representing a state in which the driver assistance function of the vehicle 10 is being executed. Similar to the stationary state image IM2, the driver assistance image IM6 is an image from the driver's perspective.

The driver assistance image IM6 includes a second background image IP7 that represents scenery outside the vehicle 10. The second background image IP7 is scenery different from the first background image IP5. Further, the driver assistance image IM6 includes a partial image IP8 representing a state in which a preceding vehicle is present ahead of the vehicle 10. In the present embodiment, the partial image IP8 represents the preceding vehicle with a virtual icon.

The driver assistance image IM6 includes a partial image IP9 indicating that the driver assistance is being executed. The partial image IP9 shows, for example, the driver assistance function being executed, a set vehicle speed, detection of a preceding vehicle, and a set following distance. In the example shown in Fig. 10, the partial image IP9 shows that ACC is being executed.

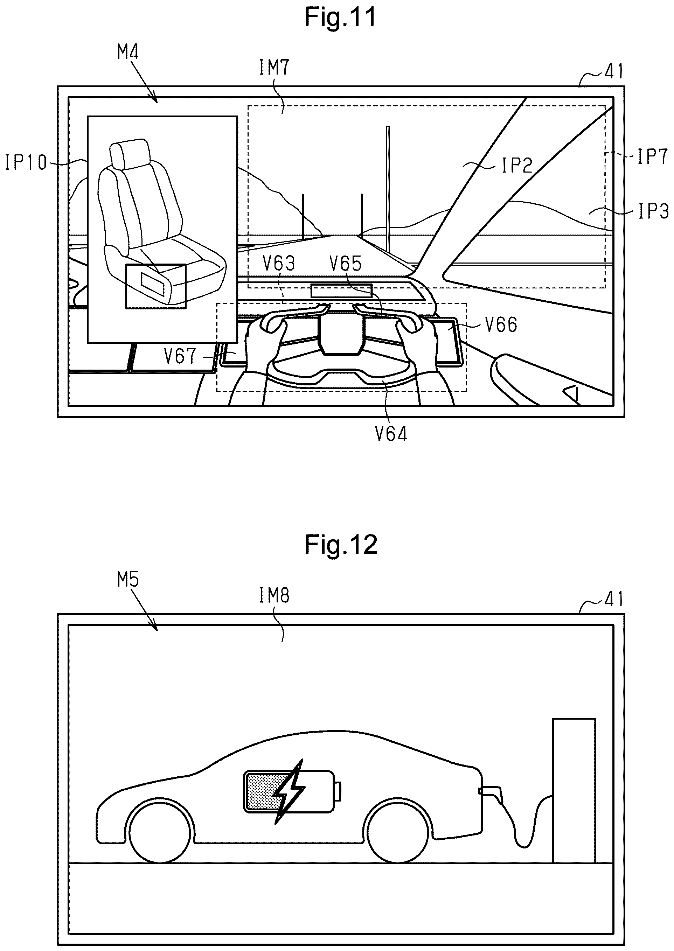

As shown in Fig. 11, the driver assistance video M4 includes a third guide image IM7 subsequent in time series to the driver assistance image IM6. Similar to the stationary state image IM2, the third guide image IM7 is an image from the driver's perspective. The third guide image IM7 includes a partial image IP10 that guides the user to perform operation for charging the battery 23. The partial image IP10 indicates that the charging operation button 68 provided in the driver's seat in the vehicle 10 should be operated.

As shown in Fig. 4, the execution device 71 displays the driver assistance video M4 in step S26, and then advances the process to step S27. In step S27, the execution device 71 determines whether an operation for charging has been performed. The operation for charging is operation of a third specific operating member 60C. The third specific operating member 60C is one of the operating members 60 determined in advance to switch the driver assistance video M4 to a subsequent video. The third specific operating member 60C is the charging operation button 68. Accordingly, the execution device 71 determines whether an operation for performing charging using the charging operation button 68 has been performed.

When the charging operation button 68 has not been operated (S27: NO), the execution device 71 repeats the process of step S27. When the charging operation button 68 has been operated (S27: YES), the execution device 71 advances the process to step S28. The driver assistance video M4 continues to be played until an affirmative determination is made in step S27.

In step S28, the execution device 71 plays the charging state video M5. Specifically, the execution device 71 causes the display 41 to display an image included in the fifth file D5 for playing the charging state video M5, and causes the speaker 42 to output sound included in the fifth file D5

In other words, the execution device 71 causes the display 41 to display the charging state video M5 in place of the driver assistance video M4 on condition that the third specific operating member 60C has been operated while the driver assistance video M4 is displayed on the display 41 of the vehicle 10 in a stationary state. The condition in this case is that an operation for performing charging using the third specific operating member 60C has been performed.

### Charging State Video

As shown in Fig. 12, the charging state video M5 includes a charging state image IM8 that simulates a state in which the battery 23 of the vehicle 10 is being charged. The charging state image IM8 is an image that simulates a state in which the battery 23 of the vehicle 10 is being charged. The charging state image IM8 represents a state in which the charging connector 90 is connected to the charging port 21 of the vehicle 10. The charging state image IM8 shows that the battery 23 of the vehicle 10 is being charged. The charging state video M5 shows a state in which the electric power stored in the battery 23 gradually increases.

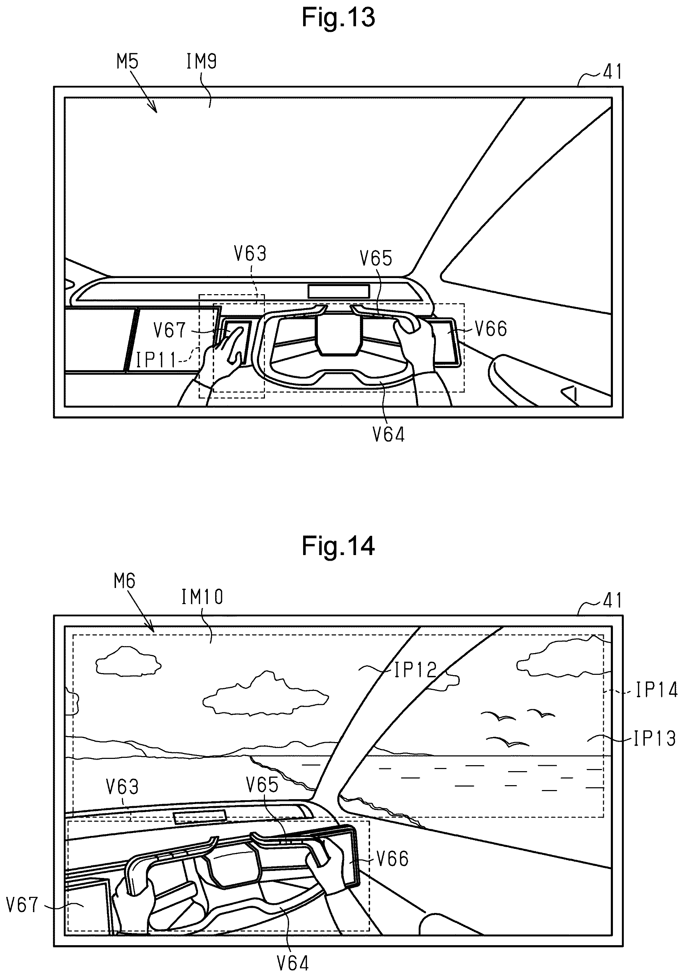

As shown in Fig. 13, the charging state video M5 includes a fourth guide image IM9 subsequent in time series to the charging state image IM8. Similar to the stationary state image IM2, the fourth guide image IM9 is an image from the driver's perspective. The fourth guide image IM9 is an image representing operation of a fourth specific operating member 60D, which is one of the operating members 60 determined in advance to switch the charging state video M5 to a subsequent video.

The fourth specific operating member 60D is the operating member 60 for switching display of the charging state video M5 to a subsequent video while the charging state video M5 is being displayed. In the present embodiment, the fourth specific operating member 60D is the second touchscreen display 67. The fourth guide image IM9 includes a partial image IP11 that guides the user to operate the second touchscreen display 67.

As shown in Fig. 4, the execution device 71 displays the charging state video M5 in step S28, and then advances the process to step S29. In step S29, the execution device 71 determines whether the fourth specific operating member 60D has been operated. When the fourth specific operating member 60D, that is, the second touchscreen display 67 has not been operated (S29: NO), the execution device 71 repeats the process of step S29. In contrast, when the fourth specific operating member 60D has been operated (S29: YES), the execution device 71 advances the processing to step S30. The charging state video M5 continues to be played until an affirmative determination is made in the process of step S29.

In step S30, the execution device 71 displays the second traveling state video M6. Specifically, the execution device 71 causes the display 41 to display an image included in the sixth file D6 for playing the second traveling state video M6, and causes the speaker 42 to output sound included in the sixth file D6

In other words, the execution device 71 causes the display 41 to display the second traveling state video M6 in place of the charging state video M5 on condition that the fourth specific operating member 60D has been operated while the charging state video M5 is displayed on the display 41 of the vehicle 10 in a stationary state.

### Second Traveling State Video

As shown in Fig. 14, the second traveling state video M6 includes a second traveling state image IM10 that simulates the field of view from the driver in the driver's seat while the vehicle 10 is traveling. The second traveling state image IM10 is an image simulating a traveling state of the vehicle 10. The second traveling state image IM10 is an image from the driver's perspective, but the captured range is different from the range of the first traveling state image IM4. Specifically, the range represented by the second traveling state image IM10 is shifted toward the front side window on the driver's seat side from the range represented by the first traveling state image IM4. Accordingly, a partial image IP13 that shows the front side window on the driver's seat side shown in the second traveling state image IM10 represents a wider range than the partial image IP3, which shows the front side window on the driver's seat side shown in the first traveling state image IM4. In contrast, a partial image IP12 that shows the windshield on shown in the second traveling state image IM10 represents a narrower range than the partial image IP2, which shows the windshield shown in the first traveling state image IM4. The second traveling state video M6 includes a third background image IP14 that represents scenery outside the vehicle 10. The third background image IP14 is scenery different from the first background image IP5. Specifically, the third background image IP14 represents a traveling state of the vehicle 10 on a coastal road.

The second traveling state video M6 further includes audio data containing a guide sound. The guide sound presents a message inquiring whether to terminate the simulated traveling state of the vehicle 10. The guide sound instructs the user, while the second traveling state video M6 is being displayed, to operate a fifth specific operating member 60E, which is one of the operating members 60 that is used to switch the display to a subsequent video. In the present embodiment, the fifth specific operating member 60E is the brake pedal 62. Specifically, the guide sound provides an audio message stating: "If you wish to stop vehicle 10, please operate brake pedal 62."

As shown in Fig. 4, the execution device 71 displays the second traveling state video M6 in step S30, and then advances the process to step S31. In step S31, the execution device 71 determines whether the fifth specific operating member 60E has been operated. Specifically, the execution device 71 determines whether the brake pedal 62 has been operated.

When the fifth specific operating member 60E has not been operated (S31: NO), the execution device 71 repeats the process of step S31. In contrast, when the fifth specific operating member 60E has been operated (S31: YES), the execution device 71 advances the processing to step S32. The second traveling state video M6 continues to be played until an affirmative determination is made in step S31.

In step S32, the execution device 71 displays the demonstration mode termination video M7. The demonstration mode termination video M7 is a video indicating termination of the demonstration mode in the vehicle 10.

In other words, the execution device 71 causes the display 41 to display the demonstration mode termination video M7 in place of the second traveling state video M6 on condition that the fifth specific operating member 60E has been operated while the second traveling state video M6 is displayed on the display 41 of the vehicle 10 in a stationary state.

Thereafter, when playback of the demonstration mode termination video M7 ends, the execution device 71 terminates the current series of processes. In the present embodiment, when playback of the demonstration mode termination video M7 ends, the execution device 71 displays content that again accepts an operation of initiating the demonstration mode.

### Differences Among Playback Content Items

The second playback content item CT2 is different from the first playback content item CT1 in the first background image IP5 in the first traveling state image IM4 included in the first traveling state video M3. In the second playback content item CT2, the first background image IP5 represents a state in which the vehicle 10 is traveling on a road toward an amusement park. In the images of the first traveling state video M3 that are continuous in time series, the image of the scenery outside the vehicle 10 changes so as to represent a situation in which the vehicle 10 gradually approaches the amusement park.

The third playback content item CT3 is different from the first playback content item CT1 in the first background image IP5 in the first traveling state image IM4 included in the first traveling state video M3. In the third playback content item CT3, the first background image IP5 represents a state in which the vehicle 10 is traveling on an expressway. In the first traveling state video M3 and the driver assistance video M4, the virtual traveling speed of the vehicle 10 in the images continuous in time series is higher than that in the first playback content item CT1.

The fourth playback content item CT4 is different from the first playback content item CT1 in the first background image IP5 in the first traveling state image IM4 included in the first traveling state video M3. In the fourth playback content item CT4, the first background image IP5 represents a state in which the vehicle 10 is traveling on an urban road. In the first traveling state video M3 and the driver assistance video M4, the virtual traveling speed of the vehicle 10 in the images continuous in time series is lower than that in the first playback content item CT1. Further, in the fourth playback content item CT4, the partial image IP9 represents a state in which PCS is being executed.

### Operation of the First Embodiment

The first embodiment allows the user in the driver's seat of the vehicle 10 to experience multimedia output using the display 41 and the speaker 42 when performing the operation of initiating the demonstration mode.

When the user performs an operation to start display in the demonstration mode, playback of the specific content item CS selected based on the user information US is started. This allows the user to experience the specific content item CS selected from the playback content items CT in accordance with the user information US of the user.

### Advantages of the Embodiment

(1) The controller 70 selects the specific content item CS from among the playback content items CT based on the user information US of the users in the vehicle 10. This allows the controller 70 to display videos suitable for the users on the display 41 by playing the playback content item CT selected based on the user information US.
(2) The videos displayed on the display 41 by playback of the specific content item CS include a traveling state video including an image simulating the vehicle 10 traveling. Accordingly, when the specific content item CS is played, the users in the vehicle 10 can view a video representing a state in which the vehicle 10 is traveling on the display 41 while the vehicle 10 is stationary.
(3) The image simulating a state in which the vehicle 10 is traveling is an image of a range including the steering wheel image V63 of the vehicle 10 and the partial image IP2 showing a part of the windshield of the vehicle 10 in the front range viewed from the driver's seat of the vehicle 10. Accordingly, a user seated in the driver's seat of the vehicle 10 can view a video representing the state in which the user is actually driving the vehicle 10, which is a state in which the vehicle 10 is traveling. In this manner, the user seated in the driver's seat of the vehicle 10 can virtually experience the state of driving the vehicle 10.
(4) The image simulating the state in which the vehicle 10 is traveling is an image of a range including the partial image IP3 representing a part of the front side glass on the driver's seat side of the vehicle 10 in a front range viewed from the driver's seat of the vehicle 10. Accordingly, the user seated in the driver's seat of the vehicle 10 can virtually experience the driver's perspective, including scenery visible through the front side window during driving of the vehicle 10.
(5) The videos displayed on the display 41 by playback of the specific content item CS include the charging state video M5. This allows the users in the vehicle 10 to view a state in which the battery 23 is being charged. In particular, for a user considering purchase of the vehicle 10, which is a battery electric vehicle, an experience of the operation performed during charging of the battery 23 prior to purchase influences the user's purchase motivation.
(6) The videos displayed on the display 41 by playback of the specific content item CS include the driver assistance video M4. This allows the users in the vehicle 10 to view a state in which driver assistance is being executed. In particular, for example, a user who has never used the driver-assistance function can obtain a sense of reassurance regarding execution of the driver-assistance function by viewing a state in which driver assistance is being executed, even though driver assistance is not actually being executed.
(7) The storage 72 stores the first video file for playback of the first video and the second video file for playback of the second video. Specifically, the video files DA include the first video file and the second video file. The execution device 71 causes the display 41 to display the second video in place of the first video on condition that one of the operating members 60 has been operated while the first video is displayed on the display 41 of the vehicle 10 in a stationary state.
   The above-described configuration allows the users in the driver's seat of the vehicle 10 to experience switching of videos displayed on the display 41 when operating the operating member 60. Accordingly, the controller 70 is capable of providing the users of the vehicle 10 with an experience in which videos simulating a traveling state of the vehicle 10, displayed on the display 41, are switched in accordance with operation of the vehicle 10.
(8) The execution device 71 causes the second video to be displayed in place of the first video on condition that a specific operating member 60 among the multiple operating members 60 is operated. Even when an operating member 60 different from the specific operating member 60 is operated, the execution device 71 does not switch the video displayed on the display 41. Accordingly, the controller 70 can link the type of operating member 60 with the content displayed on the display 41.

### Modifications

The above-described embodiment may be modified as follows. The above-described embodiment and the following modifications can be combined if the combined modifications remain technically consistent with each other.

The vehicle 10 is not limited to a battery electric vehicle. For example, the vehicle 10 may use an engine as a drive source. In this case, the vehicle 10 does not necessarily need to include the battery 23. Further, the vehicle 10 may omit the charging port 21 and the charger 22.

The vehicle 10 includes the display 41 and the speaker 42 in order to output multimedia content, but the multimedia content may be content that further outputs, for example, scent or vibration. In this case, the vehicle 10 may further include a device that outputs scent and a device that outputs vibration. The vehicle 10 may omit the speaker 42 as long as the vehicle 10 can at least output image data.

The display 41 is not limited to the center display. For example, the display 41 may be an instrument cluster display, or the first touchscreen display 66 and the second touchscreen display 67 may be used as the display 41. Further, the display 41 does not necessarily need to be a single screen. For example, the center display and the instrument cluster display may be used as the display 41.

It is sufficient that the vehicle 10 be provided with at least one operating member 60. The operating members 60 do not necessarily include some of the accelerator pedal 61, the brake pedal 62, the wheel body 64, the switches 65, the first touchscreen display 66, the second touchscreen display 67, and the charging operation button 68.

The operating members 60 are not limited to the example in the above-described embodiment. For example, the operating members 60 may include switches for opening and closing front side windows. If the display 41 is a touchscreen display, the operating members 60 may be switches displayed on the display 41. Further, for example, the operating members 60 may include the shift lever. The operating members 60 preferably include any element for implementing the traveling operation of the vehicle 10.

The controller 70 is provided with the execution device 71, which is processing circuitry including one or more processors that run computer programs (software) to execute various processes. However, the controller 70 may be processing circuitry including one or more dedicated hardware circuits such as application specific integrated circuits (ASIC) that execute at least part of various processes, or a combination thereof. Each processor includes a CPU and memory such as RAM and ROM. The memory stores program codes or commands configured to cause the CPU to execute processes. The memory, namely, a computer-readable medium, includes any available medium that is accessible by a general-purpose or special-purpose computer.

The controller 70 does not necessarily need to control charging in the vehicle 10. For example, when the vehicle 10 does not use the battery 23 as a drive source, charging does not need to be controlled. For example, a device different from the controller 70 may control charging of the battery 23 of the vehicle 10.

The controller 70 does not necessarily need to control traveling of the vehicle 10. For example, a device different from the controller 70 may control traveling of the vehicle 10. The controller 70 does not necessarily need to control driver assistance in the vehicle 10. For example, a device different from the controller 70 may control driver assistance in the vehicle 10. Specifically, the controller 70 may be a multimedia ECU that controls multimedia output, and the vehicle 10 may separately include a driver assistance ECU that controls driver assistance of the vehicle 10.

Driver assistance is not limited to the example in the above-described embodiment. The driver assistance is not limited to advanced driver assistance. It is sufficient that the driver assistance be a function of assisting the braking device 31, the drive motor 24, which is a drive source, and the steering device 32 based on detection signals from the sensors 50.

The controller 70 does not necessarily need to output sound from the speaker 42 as long as at least videos are displayed on the display 41. In addition, the controller 70 may control, in accordance with a video, the output of scent from the device that outputs scent, the output of vibration from the device that outputs vibration, or the like in the above-described modifications.

The video files DA stored in the storage 72 are not limited to the examples of the above-described embodiment. For example, the video files DA may include a file for playback of a video of nighttime traveling and a file for playback of a video of daytime traveling. Further, the video files DA may include a file for playback of a video containing an image of the exterior of the vehicle 10 while traveling.

Among the images included in a video when a video file DA is played, the image simulating the traveling state of the vehicle 10, namely, the traveling state image, may be an image that does not include the partial image IP3, which depicts a portion of the front side window on the driver's seat side.

Further, the traveling state image does not necessarily need to be an image from the driver's perspective. For example, the traveling state image may be an image from the perspective of an occupant in the front passenger seat, or may be an image showing the exterior of the vehicle 10 during traveling.

The images included in each video in the above-described embodiment may be changed. For example, the text image IP6 indicating the message inquiring whether to execute the function of driver assistance in the second guide image IM5 may be shown by an illustration, or the image may be omitted and the message may be conveyed by sound. Sound may be output together with the text image IP6.

For example, the partial image IP8 included in the driver assistance image IM6, which indicates the presence of a preceding vehicle in front of the vehicle 10, is illustrated as a virtual image, but may alternatively be an illustration of the preceding vehicle. In addition, the controller 70 may output, together with the partial image IP9 included in the driver assistance image IM6 indicating that driver assistance is being executed, the actual content of the instrument cluster display during execution of the driver assistance.

The storage 72 may omit some of the five combinations of the first video and the second video. It is sufficient that the storage 72 store at least one combination of the first video and the second video. In addition, it is sufficient that the execution device 71 switch videos in at least one combination of the first video and the second video. Further, the combinations are not limited to the examples in the above-described embodiment. For example, the execution device 71 may switch from the first traveling state video M3 to the charging state video M5.

The specific operating member 60 for switching each video to the subsequent video is not limited to the examples in the above-described embodiment. For example, the specific operating member 60 for switching from the stationary state video M2 to the first traveling state video M3 may be the accelerator pedal 61.

The controller 70 may switch the content displayed on the display 41 from the first video to the second video when any one of the operating members 60 is operated. In other words, the execution device 71 does not necessarily need to require operation of the predetermined specific operating member 60 as a condition for displaying the second video.

When displaying the charging state video M5, the controller 70 does not necessarily need to require that the operation for requesting charging of the battery 23 have been performed. For example, the controller 70 may only require that the specific operating member 60 have been operated.

When displaying the driver assistance video M4, the controller 70 does not necessarily need to require that operation for requesting the driver assistance have been performed. For example, the controller 70 may only require that the specific operating member 60 have been operated.

As a condition for switching videos, the controller 70 does not necessarily need to require that an operating member 60 has been operated. For example, the controller 70 may switch to the next video when the playback time of the video currently being displayed has elapsed. The playback content item CT may be any content in which multiple videos are switched and displayed on the display 41.

The differences among the playback content items CT are not limited to the examples in the above-described embodiment. For example, the second playback content item CT2 does not necessarily need to include the fifth file D5 for playing the charging state video M5. In addition, for example, the third playback content item CT3 may include a file for playing a video representing a state in which multiple functions of driver support are being performed. In this manner, the playback content items CT may differ in the playback time of the content, may differ in the number of included videos, or may differ in the type of included videos. When the playback content items CT include videos that introduce functions in high demand for each variation of the user information US, they are particularly suitable for users prior to purchase of the vehicle 10.

The manner in which the specific content item CS is selected based on the user information US is not limited to the examples of the above-described embodiment. If, through prior testing or simulation, a playback content item CT of high interest with respect to the user information US has been associated with the user information US, the execution device 71 may simply select the playback content item CT corresponding to the user information US as the specific content CS.

The execution device 71 may cause the selected specific content item CS to be displayed on the display 41 so as to be selectable by the user, and then play the specific content item CS on condition that the specific content item CS is selected by the user. In this case, when the user is interested in the selected specific content item CS, the controller 70 plays the specific content item CS.

The storage 72 may store multiple video files DA by acquiring the video files DA from a server or an external memory outside the vehicle 10. For example, the storage 72 may temporarily store the output program PR by acquiring the output program PR from an external server or an external memory when the execution device 71 starts execution of the output program PR.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A controller (70) configured to control an output to a display (41) mounted on a vehicle (10), the controller (70) comprising:
a non-transitory computer-readable storage medium (72); and
an execution device (71), wherein
the storage medium (72) stores multiple playback content items,
each playback content item is content in which multiple videos are switched and displayed on the display (41), and
the execution device (71) is configured to
acquire user information of a user in the vehicle (10),
select a specific content item from among the playback content items based on the acquired user information, and
play the selected specific content item to display the videos.

2. The controller (70) according to claim 1, wherein the videos displayed on the display (41) by playback of the specific content item include a traveling state video including an image simulating traveling of the vehicle (10).

3. The controller (70) according to claim 2, wherein the image simulating traveling of the vehicle (10) includes an image of a range including an image representing a steering wheel of the vehicle (10) and an image representing a part of a windshield of the vehicle (10) in a front range viewed from a driver's seat of the vehicle (10).

4. The controller (70) according to claim 3, wherein the image simulating traveling of the vehicle (10) includes an image of a range including an image representing a part of a front side window of the vehicle (10) on the driver's seat side in the front range viewed from the driver's seat.

5. The controller (70) according to any one of claims 1 to 4, wherein the videos displayed on the display (41) by playback of the specific content item include a charging state video including an image simulating charging of a battery of the vehicle (10).

6. The controller (70) according to any one of claims 1 to 5, wherein the videos displayed on the display (41) by playing the specific content item include a driver assistance video including an image representing execution of a driver assistance function of the vehicle (10).

7. The controller (70) according to any one of claims 1 to 6, wherein
the videos include a first video and a second video, and
the execution device (71) causes the display (41) to display the second video in place of the first video when a condition determined in advance is satisfied while the first video is displayed.

8. The controller (70) according to claim 7, wherein
the vehicle (10) includes multiple operating members (60), and
the condition includes that a specific operating member (60A-60E) among the operating members (60) is operated.
